Europäisches Patentamt

European Patent Office

Office européen des brevets

Veröffentlichungsnummer: **0 282 938**
**A1**

# EUROPÄISCHE PATENTANMELDUNG

Anmeldenummer: **88103971.3**

Int. Cl.⁴: **A47J 27/04**

Anmeldetag: **13.03.88**

Priorität: **13.03.87 DE 8703814 U**
**02.11.87 DE 3737156**

Veröffentlichungstag der Anmeldung:
**21.09.88 Patentblatt 88/38**

Benannte Vertragsstaaten:
**AT DE IT NL**

Anmelder: **Hirsch, Paul**
**Karl-Theodor-Strasse 91**
**D-8000 München 40(DE)**

Erfinder: **Hirsch, Paul**
**Karl-Theodor-Strasse 91**
**D-8000 München 40(DE)**

Gerät zum Erwärmen von Speisen mit Dampf.

Gerät zum Erwärmen von Speisen mit Dampf, wobei ein verhältnismäßig kleiner Wasserbehälter (7) mit einer elektrischen Heizquelle (4) beheizt wird, so daß bereits sehr kurz nach dem Einschalten der Heizquelle Dampf erzeugt wird.

Das verdampfte Wasser wird mindestens teilweise ständig nachgefüllt, und zwar bevorzugt entweder aus dem Kondensat des Dampfes, das sich an der Innenseite des Deckels des Gerätes niederschlägt, oder aus einem gesonderten Wasser-Vorratsbehälter (9), der vom Bodenraum des Unterteils (1) des Gerätes gebildet ist.

EP 0 282 938 A1

Die Erfindung betrifft ein Gerät zum Erwärmen von Speisen mit Dampf, gemäß dem Oberbegriff des Anspruchs 1.

Ein solches Gerät weist einen Unterteil auf, das mit einem Wasserbehälter zur Aufnahme von Wasser versehen ist, eine Ablagefläche, die zur Aufnahme der zu erwärmenden Speisen dient, und einen Deckel, der den Unterteil und die Ablagefläche abdeckt.

Der besondere Vorteil eines solchen Dampfkochtopfs liegt in der schonenden Erwärmung von Speisen, die weder anbrennen können noch durch Wasser ausgelaugt oder sonstwie geschädigt werden. Es ist mit einem herkömmlich Dampfkochtopf daher möglich, Speisen lange Zeit warmzuhalten, ohne daß sie währenddessen eine Qualitätseinbuße erleiden.

Nachteilig ist bei einem solchen Dampfkochtopf jedoch der Umstand, daß das Erwärmen von Speisen verhältnismäßig lange Zeit in Anspruch nimmt, da der gesamte Unterteil als Wasserbehälter dient und daher zunächst einmal der große Wasserinhalt des Unterteils zum Sieden gebracht werden muß. Aus dem gleichen Grund läßt sich der bekannte Dampfkochtopf auch schlecht zum Warmhalten von Speisen verwenden, denn die elektrische Heizquelle muß in diesem Fall periodisch an-und abgeschaltet werden, was wegen der lanen Ansprechdauer des Dampfkochtopfs zu großen Temperaturschwankungen in der warmzuhaltenden Speise führt.

Der Erfindung liegt die Aufgabe zugrunde, ein solches Gerät dahingehend weiterzubilden, daß es die raschere Erwärmung von Speisen und das Warmhalten solcher Speisen ermöglicht, ohne daß diese währenddessen hohen Temperaturschwankungen ausgesetzt sind.

Diese Aufgabe wird durch die Merkmale des Anspruchs 1 gelöst. Hierbei ist im Unterteil ein gesonderter Wasserbehälter angeordnet. Dessen Rauminhalt ist verhältnismäßig klein, so daß er nur eine verhältnismäßig geringe Wassermenge aufnehmen kann, welche sogar mit einer verhältnismäßig geringen Heizleistung sehr rasch verdampft werden kann.

Erfindungsgemäß wird das verdampfte Wasser stets wieder ersetzt, so daß es möglich ist, trotz des kleinen Volumens des Wasserbehälters längere Zeit Dampf zu erzeugen.

Beim erfindungsgemäßen Gerät setzt daher bereits kurz nach dem Einschalten die volle Dampferzeugung ein, so daß sehr rasch der zum Erwärmen von Speisen erforderliche Dampf zur Verfügung steht.

Wegen der kurzen Ansprechzeit des erfindungsgemäßen Gerätes ist es auch möglich, dieses zum Warmhalten von Speisen zu verwenden, wobei durch wiederholtes Ein-und Ausschalten der Heizeinrichtung die bereits erwärmte Speise ziemlich genau bei der gewünschten Temperatur gehalten werden kann, denn wenn bei absinkender Temperatur der Speise die Heizeinrichtung eingeschaltet wird, wird sehr bald danach die Speise wieder erwärmt. Ist die gewünschte Temperatur der Speise erreicht und wird die Heizeinrichtung abgeschaltet, dann enthält das Unterteil nicht, wie bei einem bekannten Dampfkochtopf, eine große Menge siedenden Wassers, dessen Dampferzeugung nur langsam nachläßt und das somit in unerwünschtem Maße nachheizt, sondern die geringe, im Wasserbehälter enthaltene Wassermenge speichert nur verhältnismäßig wenig Wärme; bereits sehr kurze Zeit nach Abschalten der Heizeinrichtung unterbleibt die Dampferzeugung, so daß es möglich ist, Speisen, die den Siedepunkt nicht erreichen dürfen, bei einer Temperatur kurz unter dem Siedepunkt warmzuhalten, ohne daß die Gefahr besteht, daß die Temperatur in der Speise einmal den Siedepunkt erreicht.

Gemäß einer bevorzugten Ausgestaltung der Erfindung ist der Wasserbehälter als Rinne im Unterteil ausgebildet. Der Deckel ist seiner seits so ausgebildet, daß das sich an ihm niederschlagende Kondensat des Dampfes wieder zurück in die Rinne geleitet wird.

Gemäß einer anderen, ebenfalls bevorzugten Ausgestaltung der Erfindung ist der Wasserbehälter von einem Trennsteg begrenzt, der auf dem Boden des Unterteils aufsitzt. In diesem Fall bildet der Unterteil selbst einen Wasserraum, inmitten dessen der Trennsteg angeordnet ist, wobei die Höhe des Trennsteges so bemessen ist, daß er den Wasserstand im Unterteil stets überragt.

Eine blendenartige Öffnung verbindet den vom Unterteil gebildeten Wasserraum mit dem innerhalb dessen angeordneten, vom Trennsteg begrenzten Wasserbehälter, wobei die Größe dieses Durchlasses so bemessen ist, daß er mindestens jene Wassermenge nachströmen läßt, die bei betriebener Heizeinrichtung ständig verdampft.

Die Heizeinrichtung ist bevorzugt als Tauchheizkörper ausgebildet, der praktisch verlustfrei seine gesamte Wärme an das Wasser abgibt und somit noch weiter zum Beschleunigen der Aufheizzeit beiträgt.

Der Trennsteg kann als lose in das Unterteil eingelegter Einsatz ausgebildet sein, kann aber auch an der Oberseite des Bodens oder an der Unterseite der Speiseablagefläche befestigt sein, die ihrerseits bevorzugt von einer gelochten Platte gebildet ist.

Gemäß einer weiteren Ausgestaltung der Erfindung ist ein Thermostat vorgesehen, das im Wasserraum angeordnet ist und das An-und Ausschalten der Heizeinrichtung steuert. Hierbei wird die Nachheizzeit ausgenutzt, während welcher nach dem Abschalten der Heizeinrichtung die von dieser gespeicherte Wärme noch an das Wasser im Wasserbehälter abgegeben wird. So ist es möglich, trotz Einstellens einer Temperatur durch den Thermostat, die unter dem Siedepunkt liegt, ein mehr oder weniger langes Sieden der geringen Wassermenge im Wasserbehälter und somit die Erzeugung einer größeren oder kleineren Dampfmenge zu erreichen.

Gemäß einer bevorzugten Ausgestaltung der Erfindung ist es zum Herstellen des blendenartigen Wasserdurchlasses besonders von Vorteil, daß der Wasserbehälter nicht allseitig umschlossen ist, sondern daß der Trennsteg mindestens einen Spalt aufweist oder bildet, dessen Breite so groß sein kann, daß der Austritt einer größeren Menge erhitzten Wassers aus dem Wasserbehälter in den Wasserraum gerade noch unterbleibt. Der Vorteil dieser Anordnung liegt darin, daß trotz heftig siedenden Wassers eine verhältnismäßig große Wassermenge in den Wasserbehälter nachströmen kann, so daß es möglich ist, die Heizeinrichtung verhältnismäßig groß zu dimensionieren, wodurch wiederum die zum Anwärmen von Speisen erforderliche Zeit noch weiter verkürzt wird.

Bevorzugt ist der Wasserdurchlaß so gebildet, daß die eine Seite des Wasserbehälters von einer Seitenwand des Unterteils begrenzt ist, während die übrigen Seiten vom Trennsteg umschlossen sind, der seinerseits mit seinen beiden Enden mit Abstand zu der genannten Seitenwand endet, so daß das Wasser in einem verhältnismäßig kalten Bereich des Wasserbehälters nachströmt und somit der Nachströmvorgang nicht durch aufsteigende Dampfblasen oder dergleichen behindert werden kann.

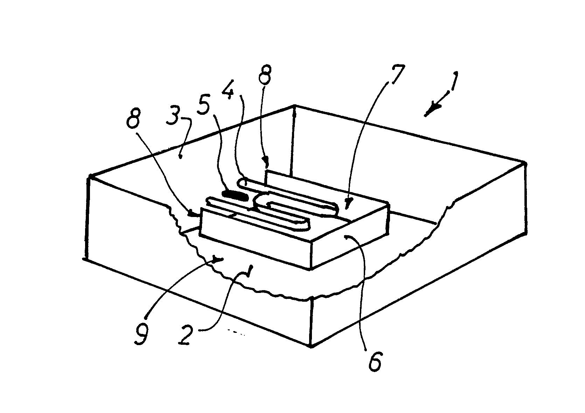

Der Gegenstand der Erfindung wird anhand der beigefügten, schematischen Zeichnung beispielsweise noch näher erläutert, in deren einziger Figur das Unterteil einer bevorzugten Ausführungsform des erfindungsgemäßen Geräts im teilweise aufgebrochenen Schrägbild gezeigt ist.

Das gezeigte Unterteil 1 weist einen im wesentlichen quadratischen oder rechteckigen Querschnitt, einen flachen Boden 2, drei Seitenwände und eine Rückwand 3 auf. Die Oberkante des Unterteils 1 kann mit einem Außenflansch versehen sein und mit diesem in eine Zarge oder eine Theke einhängbar sein. An der Unterseite können wärmeisolierende Füße angeordnet sein.

Das Unterteil 1 ist bevorzugt aus lebensmitteltauglichem, rostfrei em Edelstahl hergestellt.

Die Rückwand 3 des Behälters 1 ist von einer Tauchheizschlange 4 durchsetzt, die sich mit geringem Abstand zum Boden 2 und parallel zu diesem erstreckt.

Es ist jedoch auch möglich und gegebenenfalls von Vorteil, die Tauchheizschlange 4 nicht durch die Rückwand 3 hindurchzuführen, sondern nahe dieser nach oben abzuwinkeln und lösbar zu befestigen, so daß zum besseren Reinigen des Unterteils und der Tauchheizschlange diese aus jenem entnommen werden kann.

Auf dem Boden 2 ist ein Trennsteg 6 angeordnet, der aus einem zweimal rechtwinklig abgebogenen Band aus lebensmitteltauglichem, rostfreiem Stahl gebildet ist, an allen Stellen eine im wesentlichen gleichbleibende Höhe über dem Boden 2 aufweist und an diesen festgeschweißt ist. Der Trennsteg 6 überragt auch die Heizschlange 4.

Die beiden freien Enden des Trennsteges 6 stoßen nicht ganz gegen die Rückwand 3, sondern enden kurz vor dieser unter Bildung eines kleinen Spalts 8.

Der Bodenbereich im Unterteil 1 und außerhalb des vom Trennsteg umschlossenen Bereichs bildet einen Wasserraum 9, während der Trennsteg 6 einen Wasserbehälter 7 umschließt. Wegen der den Wasserraum 9 mit dem Wasserbehälter 7 verbindenden Spalte 8 herrscht beiderseits des Trennsteges 6 jeweils der gleiche Wasserstand, der unterhalb der Oberkante des Trennsteges 6 und bevorzugt oberhalb der Tauchheizschlange 4 angeordnet sein muß.

Beim Betreiben des Geräts wird in das Unterteil 1 ein passender Rost oder gelochter Boden eingesetzt, der entweder auf eigenen Füßen, auf Vorsprüngen an den Wänden des Unterteils oder unmittelbar auf dem Trennsteg 6 aufsitzen kann. Die Oberseite des Unterteils 1 ist durch einen geeigneten Deckel verschlossen.

Im Wasserbehälter 7 ist ferner ein Wärmefühler 5 angeordnet, der die Rückwand 3 durchsetzt und zu einem Thermostatschalter führt.

An der Außenseite der Rückwand 3 und in der Zeichnung nicht erkennbar befindet sich ein Schaltkasten, mit einer Temperatur-Wähleinrichtung für die vom Thermostat zu steuernde Temperatur, einem Ausschalter und einer Kontrolleuchte. Ferner ist ein in der Zeichnung nicht dargestellter Überhitzungs-Schutzschalter vorgesehen.

Beim Betreiben des gezeigten Geräts wird der Boden 2 bis zur obengenannten Wasserstandshöhe mit Wasser gefüllt, dann wird der in der Zeichnung nicht dargestellte Rost oder gelochte Boden eingesetzt. Eine zu erwärmende und z.B. dann warmzuhaltende Speise wird unmittelbar auf den Rost oder Boden gelegt oder mit einem Teller hierauf abgesetzt. Anschließend wird der Deckel geschlossen.

Nun wird zunächst zum Erwärmen der Speise der obengenannte Ausschalter angeschaltet, so daß die Tauchheizschlange 4 ständig Wärme abgibt. Hierdurch wird das Wasser im Wasserbehälter 7 sehr rasch zum Sieden gebracht und siedet ständig weiter, wobei durch die Spalte 8 kaltes Wasser aus dem Wasserraum 9 in den Wasserbehälter 7 nachströmt.

Nach verhältnismäßig kurzer Zeit, in der Regel nur sehr wenigen Minuten, ist die Speise erwärmt und das Gerät kann auf Warmhaltebetrieb geschaltet werden. Zu diesem Zweck wird der Ausschalter ausgeschaltet und der Thermostat-Wählhebel auf eine gewünschte Temperatur eingestellt. Diese Temperatur entspricht jedoch nicht der vom Wärmefühler 5 gemessenen Temperatur, sondern der jener der warmzuhaltenden Speise, die mit der Wasser-Solltemperatur im Wasserbehälter 7 in Relation steht.

Die Tauchheizschlange 4 wird nun periodisch an-und abgeschaltet, wobei periodisch jedesmal eine gewisse Dampfmenge erzeugt wird, die dazu dient, die mittlerweile ein wenig abgekühlte Speise wieder auf die gewünschte Temperatur zu erwärmen.

Bei längerem Warmhaltebetrieb wird sich auch das Wasser im Wasserraum 9 erwärmen, was aber auf die Funktion des Geräts keinen störenden Einfluß ausübt, sondern vielmehr dazu beiträgt, die Speisen gleichmäßig warmzuhalten.

**Ansprüche**

1. Gerät zum Erwärmen von Speisen mit Dampf, mit
- einem Unterteil,
- einem im Unterteil angeordneten, von einem elektrischen Heizkörper beheizten Wasserbehälter,
- einer im Unterteil angeordneten, außerhalb des Wasserbehälters gelegenen Ablagefläche für die Speisen, und
- einem das Unterteil überdeckenden Deckel, dadurch **gekennzeichnet, daß**
-der Wasserbehälter (7) nur einen Teil der Bodenfläche des Unterteils (1) einnimmt, und
- eine Einrichtung (8, 9) zum ständigen Nachfüllen des Wasserbehälters (7) vorgesehen ist.

2. Gerät nach Anspruch 1, dadurch gekennzeichnet, daß
-der Wasserbehälter als eine am Rand der Ablagefläche angeordnete und diese mindestens zum Teil umgebende Rinne ausgebildet ist, und
- die Unterkante des als Abdeckhaube ausgebildeten Deckels zum Einleiten von Kondensat in die Rinne und somit zum Nachfüllen des Wassers in diese einmündet.

3. Gerät nach Anspruch 2, dadurch gekennzeichnet, daß die Ablagefläche zur Rinne hin geneigt ist oder zu dieser hin geneigte Wasser-Ablaufrillen aufweist.

4. Gerät nach Anspruch 1, dadurch gekennzeichnet,
- daß im Unterteil (1) ein sich über im wesentlichen dessen gesamte Bodenfläche erstreckender Wasserraum (9) ausgebildet ist,
- der Wasserbehälter (7) im Wasserraum (9) angeordnet und durch einen sich bis mindestens nahe zur Wasserstandshöhe erstrekenden Trennsteg (6) gegenüber dem Wasserraum (9) abgegrenzt ist, und
- ein Wasserdurchlaß (8) zwischen dem Wasserbehälter (7) und dem außerhalb von diesem liegenden Teil des Wasserraumes (9) gebildet ist.

5. Gerät nach einem der Ansprüche 1 bis 4, dadurch gekennzeichnet, daß der Heizkörper als Tauchheizkörper (4) ausgebildet ist, der im Inneren des Wasserbehälters (7) angeordnet ist.

6. Gerät nach Anspruch 5, dadurch gekennzeichnet, daß der Trennsteg (6) am Boden (2) des Unterteils (1) befestigt ist.

7. Gerät nach Anspruch 5, dadurch gekennzeichnet, daß die Ablagefläche von einem perforierten Boden gebildet ist, an dessen Unterseite der Trennsteg (6) befestigt ist.

8. Gerät nach Anspruch 5, dadurch gekennzeichnet, daß der Trennsteg (6) als gesondertes Teil ausgebildet und in den Wasserraum (9) eingelegt ist.

9. Gerät nach einem der Ansprüche 5 bis 9, dadurch gekennzeichnet, daß der Trennsteg (6) zur Bildung des blendenartigen Wasserdurchlasses einen geringen Abstand zur Seitenwand (3) des Unterteils (1) aufweist.

10. Gerät nach einem der Ansprüche 5 bis 10, gekennzeichnet durch ein den Heinzkörper (24; 24') ansteuerndes, mit seinem Meßfühler (5) im Wasserbehälter (7) angeordnetes Thermostat.

0 282 938

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 820 555 (PALMER) <br> * Das ganze Dokument * <br> --- | 1,5,10 | A 47 J 27/04 |
| X | US-A-2 766 366 (ECKHOFF) <br> * Das ganze Dokument * <br> --- | 1,5,10 | |
| X | US-A-1 741 569 (HINDMAN) <br> * Das ganze Dokument * <br> --- | 1,4,5, 10 | |
| X | DE-C- 41 645 (BECK) <br> * Das ganze Dokument * <br> --- | 1,2 | |
| X | DE-C- 382 440 (METZGER et al.) <br> * Das ganze Dokument * <br> --- | 1,4,7 | |
| X | US-A-2 867 712 (SCHWANEKE) <br> * Das ganze Dokument * <br> --- | 1,2 | |
| X | FR-A-2 398 433 (N.V. PHILIPS' GLOEILAMPENFABRIEKEN) <br> * Das ganze Dokument * <br> --- | 1 | |
| X | GB-A-1 179 164 (GENERAL ELECTRIC) <br> * Das ganze Dokument * <br> --- | 1 | RECHERCHIERTE SACHGEBIETE (Int. Cl.4) <br><br> A 47 J |
| X | US-A-4 509 412 (WHITTENBURG et al.) <br> * Das ganze Dokument * <br> --- | 1 | |
| X | US-A-3 902 044 (DOYLE et al.) <br> * Das ganze Dokument * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 14-06-1988 | SCHARTZ J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)